# EUROPÄISCHE PATENTSCHRIFT

(11) **EP 3 771 582 B1**
(45) Veröffentlichungstag und Bekanntmachung des Hinweises auf die Patenterteilung: **13.10.2021**
(21) Anmeldenummer: 20185176.3
(22) Anmeldetag: 10.07.2020
(51) Int. Cl.: B60K 6/48, B60K 6/547, B60W 10/02, B60W 10/06, B60W 10/08, B60W 10/113, B60W 20/30, F16H 61/688, F16D 48/06, F16D 13/38, B60W 20/19

(54) **VERFAHREN ZUM BETREIBEN EINES HYBRIDISIERTEN DOPPELKUPPLUNGSGETRIEBES**
METHOD FOR OPERATING A HYBRID DOUBLE COUPLING TRANSMISSION DRIVE TRAIN
PROCÉDÉ DE FONCTIONNEMENT D'UNE BOÎTE DE VITESSES HYBRIDISÉE À DOUBLE EMBRAYAGE

(30) Priorität: 31.07.2019 DE 102019211387
(43) Veröffentlichungstag der Anmeldung: 03.02.2021
(73) Patentinhaber: Magna PT B.V. & Co. KG, 74199 Untergruppenbach (DE)
(72) Erfinder: OTT, Mario, 70839 Gerlingen (DE); YU, Yang, 74080 Heilbronn (DE); AWAD, Muhammed, 74399 Walheim (DE)
(74) Vertreter: Rausch, Gabriele

(56) Entgegenhaltungen:
- EP-A1- 1 559 603
- EP-A1- 3 501 928
- WO-A1-2008/031389

## Beschreibung

Die Erfindung betrifft ein Verfahren zum Betreiben eines hybridisierten Doppelkupplungsgetriebe Antriebsstranges, der einen Verbrennungsmotor, einen Doppelkupplungsanordnung mit einer ersten und einer zweiten Reibkupplung, ein erstes Teilgetriebe, ein zweites Teilgetriebe sowie eine elektrische Maschine aufweist, die an den Eingang von Teilgetriebe angebunden oder damit verbindbar ist, wobei in einem hybridischen Boost-Betrieb zunächst Antriebsleistung von der elektrischen Maschine über das Teilgetriebe übertragen wird, und die dem Teilgetriebe zugeordnete Reibkupplung geöffnet und die Gangstufe 2 eingelegt ist, und Antriebsleistung von dem Verbrennungsmotor über das Teilgetriebe übertragen wird, und die im Teilgetriebe angeordnete Reibkupplung geschlossen und die Gangstufe 3 eingelegt ist, und bei weiterer Beschleunigung das Verfahren das antriebswirksame zwischenzeitliche Umhängen der elektrischen Maschine in das Teilgetriebe TG1 umfasst.

### Stand der Technik

Ein derartiger Doppelkupplungsgetriebe-Antriebsstrang ist beispielsweise aus dem Dokument DE 10 2010 044 618 A1 bekannt. Der Leistungsstrang beinhaltet ein Doppelkupplungsgetriebe, das zwei Leistungsübertragungspfade aufweist, so dass Gangwechsel ohne Zugkrafteinbruch durchführbar sind. Dabei wird das von dem Verbrennungsmotor bereitgestellte Antriebsmoment durch überschneidende Betätigung von einem Leistungsübertragungspfad auf den anderen zugkraftunterbrechungsfrei übergeben. Ferner ist es bekannt, Antriebsstränge für Kraftfahrzeuge zu hybridisieren. Dies beinhaltet generell die Bereitstellung wenigstens einer elektrischen Maschine, die in der Regel als elektrischer Motor oder als elektrischer Generator arbeiten kann. In dem Betriebsmodus als elektrische Maschine kann zusätzliches Antriebsmoment bereitgestellt werden. In dem Betriebsmodus als elektrischer Generator kann die elektrische Maschine rekuperierend arbeiten, um beispielsweise im Schubbetrieb elektrische Energie zum Laden eines Energiespeichers zu gewinnen. Generell ist es in derartigen Antriebssträngen bekannt, eine elektrische Maschine zwischen dem Antriebsmotor und dem Doppelkupplungsgetriebe anzuordnen. Bei dem oben beschrieben Hybrid-Antriebsstrang ist die elektrische Maschine jedoch innerhalb des Doppelkupplungsgetriebes zumindest zeitweise mit einem Eingang von einem der Teilgetriebe verbunden, ist also in Leistungsflussrichtung hinter der zugeordneten Reibkupplung angebunden. Hierdurch liegt ein Summenpunkt von Antriebsmotor und elektrischer Maschine nicht vor dem Eingang der Doppelkupplungsanordnung sondern im Getriebe.

Ein weiterer derartiger Doppelkupplungsgetriebe-Antriebsstrang ist aus dem Dokument EP 3 501 928 A1 bekannt.

Aus der EP 2 765 338 B1 ist ein hybridischer Betrieb bekannt, bei dem beispielsweise im Zugbetrieb ein "Boost"-Modus eingerichtet ist, bei dem nicht nur der Verbrennungsmotor Antriebsleistung auf eine Antriebsachse überträgt, sondern zusätzlich die elektrische Maschine Antriebsmoment bereitstellt, um ein vom Fahrer angefordertes Wunschmoment zu erreichen. Die elektrische Maschine wird dabei vorzugsweise in Drehzahlbereichen betrieben, die identisch oder (über die Anbindungs-Übersetzung) angepasst sind an die Drehzahlen, die der Verbrennungsmotor bereitstellen kann. Bei Bereitstellung von Verbrennungsmotor-Antriebsleistung über den einen Leistungsübertragungspfad kann es vorkommen, dass aufgrund der Übersetzungen in dem anderen Leistungsübertragungspfad ein Gangwechsel vorzunehmen ist. Das Verfahren ermöglicht zunächst, eine Quellgangstufe in dem der elektrischen Maschine zugeordneten Teilgetriebe auszulegen, um dann ggf. eine Zielgangstufe schnell einzulegen. Dabei wird erreicht, dass das zweite Teilgetriebe zum Auslegen der Quellgangstufe nicht dadurch lastfrei gestellt wird, dass das Moment der elektrischen Maschine abgesenkt wird, sondern dadurch, dass die diesem Teilgetriebe zugeordnete Reibkupplung zumindest teilweise geschlossen wird. Hierdurch ist es möglich, für einen längeren Zeitraum ein gewisses Unterstützungsmoment durch die elektrische Maschine bereitzustellen, wobei das von der elektrischen Maschine für diesen Fall bereitgestellte Drehmoment dann über die beiden Reibkupplungen und den anderen Leistungsübertragungspfad übertragen wird.

EP 1 559 603 A1 zeigt ein Hybrid-Antriebsverfahren mit einem Antriebsstrang, der dem Antriebsstrang der Anmeldung entspricht. Das Verfahren umfasst dabei einen Boost-Betrieb, in dem sowohl der Verbrennungsmotor als auch die elektrische Maschine das Fahrzeug antrieben.

Hier wird beschrieben, wie die elektrische Maschine vom zweiten in den vierten Gang geschaltet wird, während der Verbrennungsmotor im dritten Gang bleibt. Es sind keine zwei, quasi parallel zueinander vorgenommenen Schaltvorgänge vorhanden.

Die DE 10 2013 002 330 A1 zeigt ein Doppelkupplungsgetriebe, das im Boost-Betrieb beim Hochschalten des Verbrennungsmotors in einen höheren Gang unterstützt. Auch in diesem Stand der Technik treiben die beiden Maschinen nicht parallel in den dritten Gang ein, um dann nahezu gleichzeitig in den vierten Gang zu schalten.

Es ist Aufgabe der Erfindung, ein Verfahren zum Betreiben eines hybridisierten Doppelkupplungsgetriebes vorzuschlagen, bei dem das Hochschalten der elektrischen Maschine auch bei maximalem Moment des Verbrennungsmotors ohne erhebliche Zugkraftunterbrechung erfolgen kann.

### Beschreibung der Erfindung

Die Aufgabe wird gelöst mit einem Verfahren zum Betreiben eines hybridisierten Doppelkupplungsgetriebe Antriebsstranges, der einen Verbrennungsmotor, einen Doppelkupplungsanordnung mit einer ersten und einer zweiten Reibkupplung, ein erstes Teilgetriebe, ein zweites Teilgetriebe sowie eine elektrische Maschine aufweist, die an den Eingang von Teilgetriebe angebunden oder damit verbindbar ist, wobei in einem hybridischen Boost-Betrieb zunächst Antriebsleistung von der elektrischen Maschine über das Teilgetriebe übertragen wird, und die dem Teilgetriebe zugeordnete Reibkupplung geöffnet und die Gangstufe 2 eingelegt ist, und Antriebsleistung von dem Verbrennungsmotor über das Teilgetriebe übertragen wird, und die im Teilgetriebe angeordnete Reibkupplung geschlossen und die Gangstufe 3 eingelegt ist, und bei weiterer Beschleunigung das Verfahren das antriebswirksame Umhängen der elektrischen Maschine in das Teilgetriebe TG1 umfasst, wobei Antriebsmaschinen über das Teilgetriebe TG1 im der Gangstufe 3 betrieben werden, bis kurz vor dem Erreichen der Grenzdrehzahl des Verbrennungsmotors die elektrische Maschine auf die Gangstufe 4 geschaltet wird, und der Verbrennungsmotor im geringen Zeitabstand dazu von Gangstufe 3 auf Gangstufe 4 geschaltet wird und diese Schaltung von der elektrischen Maschine derart unterstützt wird, dass für den Fahrer die Schaltung des Verbrennungsmotors nicht spürbar ist, wodurch der gesamte Schaltablauf von elektrischer Maschine und Verbrennungsmotor als eine einzige Schaltung wahrgenommen wird.

Vorteilhafterweise wird das Schalten des Verbrennungsmotors von Gangstufe 3 in Gangstufe 4 von der elektrischen Maschine kompensiert, wodurch der Schaltvorgang stark abgemildert wird, also der Fahrer keinen deutliche Zugkraftunterbrechung verspürt.

Die beiden ausgeführten Hochschaltungen auf den vierten sowohl der elektrischen Maschinen als auch des Verbrennungsmotors erfolgt in einem Zeitabstand, der unter 150 ms liegt.

Es ist von Vorteil, dass die zugkraftunterbrechungsfreie Schaltung des Verbrennungsmotors durch Überblenden der beiden Reibkupplungen erfolgt, wobei die Zeit für das Überblenden die Hälfte der Zeit für einen regulären Schaltvorgang umfasst.

Unter Überblenden wird dabei verstanden, dass die Reibkupplung eines Teilgetriebes geöffnet und die Reibkupplung des anderen Teilgetriebes geschlossen wird. Eine solche zugkraftunterbrechungsfreie Schaltung mit Überblendung erfolgt normalerweise einem Zeitrahmen von 50 bis 150 ms.

### Beschreibung der Figuren

Die Erfindung wird nachfolgend beispielhaft unter Bezugnahme auf die beigefügte Zeichnung beschrieben.
Fig. 1 zeigt eine schematische Darstellung eines Doppelkupplungsgetriebes.
Fig. 2 zeigt ein Schema des Schaltvorgangs.
Figuren 3 bis 9 zeigten schematisch den Ablauf des Verfahrens.

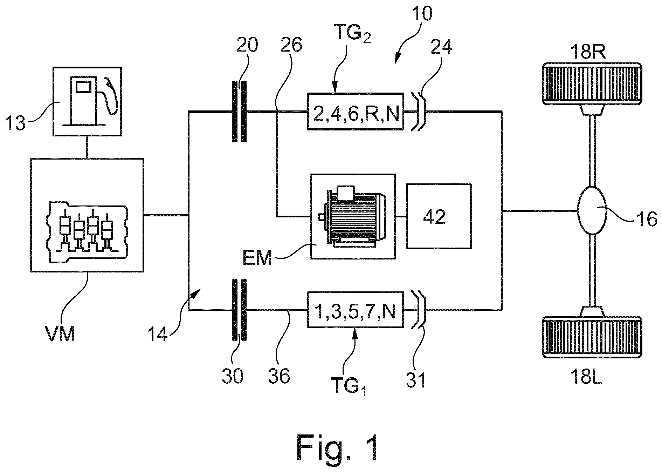

Der Antriebsstrang 10 nach Figur 1 beinhaltet einen Antriebsmotor VM, beispielsweise in Form eines Verbrennungsmotors, der aus einem Energiespeicher wie einem Kraftstofftank 13 versorgt wird. Ferner beinhaltet der Antriebsstrang 10 ein Doppelkupplungsgetriebe 14, dessen Abtriebsseite mit einem Differential 16 verbunden ist. Das Differential 16 verteilt Antriebsleistung auf ein linkes und ein rechtes angetriebenes Rad 18L, 18R. Das Doppelkupplungsgetriebe 14 beinhaltet eine zweite Reibkupplung 20 sowie ein zweites Teilgetriebe TG2. Das zweite Teilgetriebe TG2 beinhaltet beispielsweise Gangstufen N, 2, 4, 6, R, die mittels schematisch angedeuteter Schaltkupplungen 24 ein- und auslegbar sind. Die zweite Reibkupplung 20 und das zweite Teilgetriebe TG2 bilden einen zweiten Leistungsübertragungspfad 26 zur Übertragung von Leistung von dem Antriebsmotor VM zu dem Differential 16. Das Doppelkupplungsgetriebe 14 beinhaltet ferner eine erste Reibkupplung 30 sowie ein erstes Teilgetriebe TG1. Das erste Teilgetriebe TG1 beinhaltet beispielsweise die ungeraden Gangstufen N, 1, 3, 5, 7 etc., die mittels zugeordneter Schaltkupplungen 31 ein- und auslegbar sind. Die erste Reibkupplung 30 und das erste Teilgetriebe TG1 bilden einen ersten Leistungsübertragungspfad 36 zur Übertragung von Antriebsleistung von dem Antriebsmotor VM zu dem Differential 16. Ferner beinhaltet der Antriebsstrang 10 eine elektrische Maschine EM, die mit einer Anordnung 42 zur Ansteuerung und Energieversorgung verbunden ist. Die Anordnung 42 kann beispielsweise eine Leistungselektronik mit einem Umrichter sowie eine Batterie beinhalten. Eventuell ist auch die Getriebesteuerung integriert. Die elektrische Maschine EM ist an das zweite Teilgetriebe TG2 fest angebunden, beispielsweise mittels eines Stirnradsatzes oder dergleichen.

Die Steuerung des Getriebes und der elektrischen Maschine erfolgt in der Getriebesteuerung.

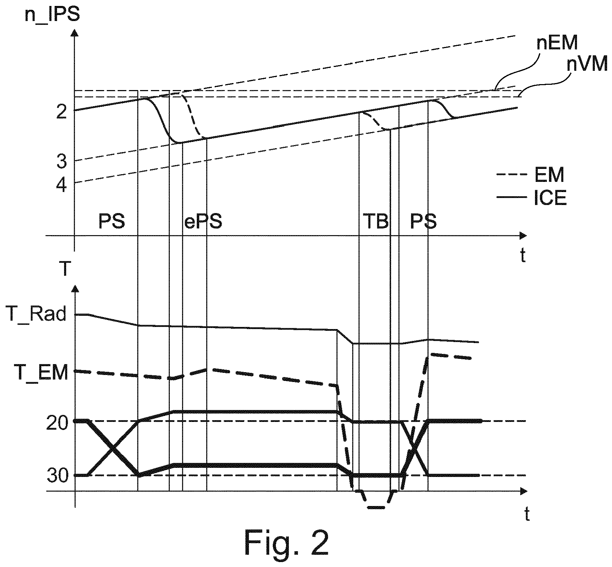

Fig. 2 zeigt dabei ein Flussdiagramm eines Verfahrens zum Betreiben eines hybridisierten Doppelkupplungsgetriebe,

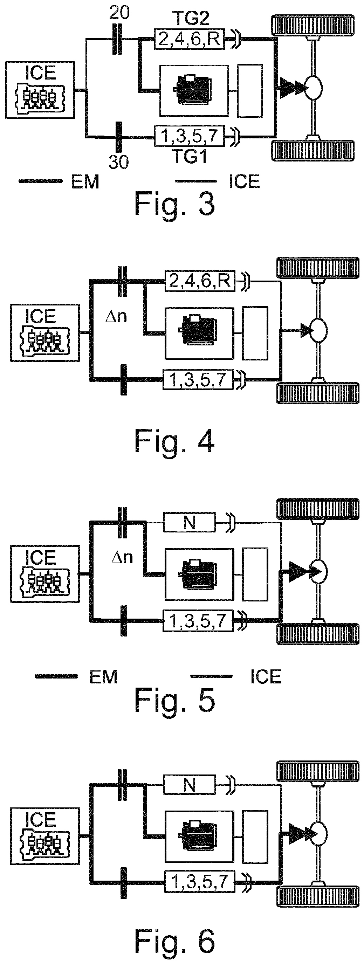

Fig. 3 bis 9 zeigt die einzelnen Schritte des Verfahrens.

Fig. 2 den zeitlichen Verlauf des Zustandes einer Schaltkupplungsanordnung bezüglich der Drehzahl, wobei die limitierenden Drehzahlen nVM : Grenzdrehzahl des Verbrennungsmotors und nEM : Grenzdrehzahl der elektrischen Maschine eingezeichnet sind.

Ausgehend von einen Fahrerwunsch, der eine hohe Beschleunigung erwartet, wird mit dem zweiten Gang und beiden Antriebsmaschinen, dem elektrischen Motor EM und dem Verbrennungsmotor VM, gefahren.

Ausgehend von diesem Fahrzustand wird der Verbrennungsmotor VM im Teilgetriebe TG1 in die dritte Gangstufe geschaltet, wenn die Grenzdrehzahl nVM erreicht ist. Das erfolgt mit Power Shift PS also unter Last.

Die elektrische Maschine EM dagegen wird weiterhin bis zum Erreichen ihrer Grenzdrehzahl nEM im der zweiten Gangstufe im Teilgetriebe TG 2 betrieben.

Wie man im unteren Bereich der Fig. 2 erkennt führt der reguläre Schaltvorgang bei dem über der Zeit aufgetragenem Drehmoment zu einem Einbruch des Drehmoments T_Rad, des vom Antriebsstrang tatsächlich an den Antriebsrädern bereitgestellten Moments.

Dieser Abfall im Drehmoment, der durch das Überblenden der beiden Kupplungen 20, 30 erfolgt, ist begrenzt auf ein Maß, das vom Fahrer als Antwort auf einen Schaltvorgang akzeptiert wird.

Der Fahrzustand wird in Figur 3 dargestellt. Dazu ist in dem zweiten Teilgetriebe TG2 zunächst eine Gangstufe 2 eingelegt, die Kupplung 20 ist geöffnet, die Kupplung 30 des ersten Teilgetriebes TG1 geschlossen, um einen Kraftfluss des Verbrennungsmotors VM auf den Antrieb zu erreichen. Die elektrische Maschine treibt ebenfalls im Boost-Betrieb an.

Zu diesem Zeitpunkt erreicht die Drehzahl der elektrischen Maschinen die Grenzdrehzahl nEM, wonach das erfindungsgemäße Verfahren eingeleitet wird.

Der Verbrennungsmotor VM treibt über die 3. Gangstufe und das erste Teilgetriebe TG1 den Antriebsstrang an, während die Antriebsleistung der elektrischen Maschine EM vom Teilgetriebe TG2 auf das Teilgetriebe TG1 umgesetzt werden muss. Dazu wird, wie in Figur 4 dargestellt, die Kupplung 20 des Teilgetriebes TG2 schleifend geschlossen, wobei die Antriebsleistung dann über die Kupplung 20 auf das Teilgetriebe TG 1 übertragen wird.

Dazu wird das Moment der zweiten Reibkupplung 20 erhöht, und zwar auf einen Wert im Wesentlichen gleich dem von der elektrischen Maschine EM bereitgestellten Drehmoment TEM. Dies ist am Ende dieser Phase erreicht, so dass die Gangstufe 2 im Teilgetriebe TG 2 ausgelegt werden kann, siehe Fig. 5. Das Teilgetriebe TG2 befindet sich somit in einem neutralen Zustand.

Die Antriebsenergie der elektrischen Maschine wird dann komplett, wie in Figur 6 dargestellt über das Teilgetriebe TG1 übertragen. Dieser Schaltvorgang stellt eine elektrische Umschaltung ePS dar. In dieser Fahrphase treiben beide Antriebsmaschinen in die Gangstufe 3 ein.

Das Auslegen der Gangstufe 2 ist möglich, ohne dass das Drehmoment TEM der elektrischen Maschine abfällt, vielmehr bleibt das Moment TEM der elektrischen Maschine im Wesentlichen konstant.

Dies hat zur Folge, dass das an der Antriebsachse zur Verfügung stehende Moment T_Rad nicht abfällt. Der Grund hierfür liegt darin, dass ein Teil des von der elektrischen Maschine bereitgestellten Momentes TEM über die zweite Reibkupplung 20 und über die erste Reibkupplung 30 am Eingang des ersten Teilgetriebes TG1 zur Verfügung gestellt werden kann.

Im weiteren zeitlichen Verlauf nähert sich die Drehzahl des Verbrennungsmotors wieder der Grenzdrehzahl nVM an. Damit wird es notwendig den Verbrennungsmotor in den 4. Gang zu schalten.

Im anschließenden Schritt S2 wird das Einlegen der Zielgangstufe vorbereitet, wobei in einer geringen zeitlichen Abstand eine nicht unterbrechungsfreie Schaltung Torque Break TB für die elektrische Maschine EM erfolgt, und danach die zugkraftunterbrechungsfreie Umschaltung von der 3. in die 4. Gangstufe für den Verbrennungsmotor.

Hierzu wird zunächst das Moment TEM allmählich reduziert. Die zweite Reibkupplung 20 bleibt in dieser Phase in einem Zustand, bei dem das ehemals von der elektrischen Maschine EM bereitgestellte Moment zumindest teilweise übertragbar ist, so dass nach wie vor eine Zugkraftunterstützung erfolgen kann.

Im anschließenden Schritt bleibt die zweite Reibkupplung 20 geschlossen. Zum anderen wird das von der elektrischen Maschine bereitgestellte Drehmoment parallel oder zumindest abschnittsweise gleichzeitig reduziert, bis das von der elektrischen Maschine EM bereitgestellte Drehmoment TEM im Wesentlichen gleich 0 ist.

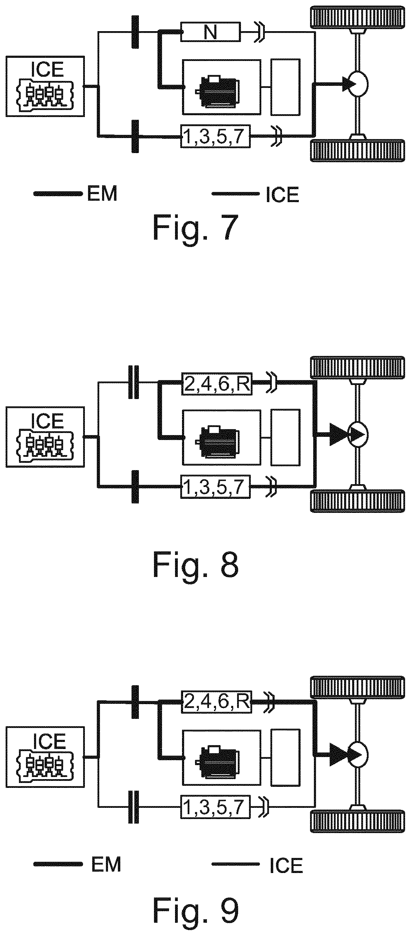

Durch diese Maßnahme wird das zweite Teilgetriebe TG2 lastfrei gestellt. Im Folgenden wird dann die Drehzahl nEM der elektrischen Maschine so verändert, so dass auf die Drehzahl der Zielgangstufe synchronisiert wird, nämlich die Gangstufe G4, die dann eingelegt wird, siehe Figur 7.

Anschließend wird das von der elektrischen Maschine EM bereitgestellte Drehmoment TEM wieder erhöht, und zwar auf ein Zielmoment, derart, dass das an den Rädern des Kraftfahrzeuges bereitgestellte Moment T_Rad wieder dem Wunschmoment des Fahrers entspricht.

In der Zeit, in der das Drehmoment TEM der elektrischen Maschinen EM erhöht wird, wird zugkraftunterbrechungsfrei der Gangwechsel von Gang 3 auf Gang 4 für den Verbrennungsmotor vollzogen. Dieses Überblenden erfolgt schneller als der normale Überblendungsvorgang einer Schaltung. Der Zeitaufwand ist dabei etwa halb so groß wie in einem regulären Schaltvorgang. Das ist dadurch möglich das die elektrische Maschine Drehmoment TEM zur Verfügung stellt. Zum Beginn des Überblendvorgangs steigt das Drehmoment stark an und erreicht dabei im Abschluss des Überblendvorgangs ein Maximum, das über dem gefahrenen Drehmoment liegt und danach langsam reduziert wird.

In der Phase 1 kann das Moment der ersten Reibkupplung 30 etwas erhöht werden, und zwar vorzugsweise analog bzw. zeitlich parallel zu dem Erhöhen des Momentes der zweiten Reibkupplung 20, so dass während der Phase S1 das Moment TEM der elektrischen Maschine zusätzlich zu dem Moment TVM des Verbrennungsmotors in Richtung Abtrieb übertragen wird.

Dadurch, dass der Gangwechsel des Verbrennungsmotors VM zeitlich nah an dem Punkt des Umsetzens der elektrischen Maschine vom Teilgetriebe TG1 auf Teilgetriebe TG2 erfolgt, verspürt der Fahrer nur eine geringe Zugkraftunterbrechung, die für ihn im Bereich einer tolerierbaren Gangwechsel-Antwort liegt.

Der Einbruch in der Zugkraft durch Gangwechsel vom 3. in den 4. Gang für den Verbrennungsmotor wird durch den Boost Betrieb der elektrischen Maschine kompensiert. Der verspürte Einbruch basiert auf dem Umhängen der Antriebsleistung der elektrischen Maschine vom Teilgetriebe TG1 auf das Teilgetriebe TG2.

Der Fahrer verspürt eine geringe Zugkraft-Verringerung, die für ihn akzeptabel ist, und deren Ursache für den Fahrer nicht relevant ist.

### Bezugszeichenliste

10 Antriebsstrang
13 Kraftstofftank
14 Doppelkupplungsgetriebe
16 Differential
18L,18R Rad
20 zweite Reibkupplung
26 zweiter Leistungsübertragungspfad
24, 31 Schaltkupplung
30 erste Reibkupplung
36 erster Leistungsübertragungspfad
42 Ansteuerung
TG1 erstes Teilgetriebe
TG2 zweites Teilgetriebe
VM Verbrennungsmotor
EM elektrische Maschine
nVM: Grenzdrehzahl des Verbrennungsmotors
nEM: Grenzdrehzahl der elektrischen Maschine
TD: von einem Fahrer angefordertes Wunschmoment
T_Rad: vom Antriebsstrang tatsächlich an den Antriebsrädern bereitgestelltes
TEM: von der elektrischen Maschine EM bereitgestelltes Drehmoment

## Patentansprüche

1. Verfahren zum Betreiben eines hybridisierten Doppelkupplungsgetriebe Antriebsstranges (10), der einen Verbrennungsmotor (VM), einen Doppelkupplungsanordnung mit einer ersten und einer zweiten Reibkupplung (30, 20), ein erstes Teilgetriebe (TG1), ein zweites Teilgetriebe (TG2) sowie eine elektrische Maschine (EM) aufweist, die an den Eingang des zweiten Teilgetriebes (TG2) angebunden oder damit verbindbar ist, wobei in einem hybridischen Boost-Betrieb zunächst Antriebsleistung von der elektrischen Maschine (EM) über das zweite Teilgetriebe (TG2) übertragen wird, und die dem zweiten Teilgetriebe (TG2) zugeordnete Reibkupplung (20) geöffnet und die Gangstufe 2 eingelegt ist, und Antriebsleistung von dem Verbrennungsmotor (VM) über das erste Teilgetriebe (TG1) übertragen wird, und die im ersten Teilgetriebe (TG1) angeordnete Reibkupplung (30) geschlossen und die Gangstufe 3 eingelegt ist, und bei weiterer Beschleunigung das Verfahren das antriebswirksame Umhängen der elektrischen Maschine (EM) in das erste Teilgetriebe (TG1) umfasst, **dadurch gekennzeichnet, dass** beide Antriebsmaschinen (EM,VM) über das erste Teilgetriebe (TG1) im der Gangstufe 3 betrieben werden, bis kurz vor dem Erreichen der Grenzdrehzahl (nVM) des Verbrennungsmotors (VM) die elektrische Maschine (EM) auf die Gangstufe 4 geschaltet wird (Schaltvorgang 1), und der Verbrennungsmotor im geringen Zeitabstand zur Schaltung der elektrischen Maschinen (EM) von Gangstufe 3 auf Gangstufe 4 geschaltet wird (Schaltvorgang 2).

2. Verfahren nach Anspruch 1, **dadurch gekennzeichnet, dass** das Schalten (Schaltvorgang 2) des Verbrennungsmotors (VM) von Gangstufe 3 in Gangstufe 4 von der elektrischen Maschine (EM) kompensiert wird.

3. Verfahren nach Anspruch 1 oder 2, **dadurch gekennzeichnet, dass** der Zeitabstand der beiden Schaltungsvorgänge (Schaltvorgang 1 und 2) unter 150 ms liegt.

4. Verfahren nach einem der Ansprüche 1 bis 3, **dadurch gekennzeichnet, dass** die zugkraftunterbrechungsfreie Schaltung des Verbrennungsmotors durch Überblenden der beiden Reibkupplungen (30, 20) erfolgt, wobei die Zeit für das Überblenden die Hälfte der Zeit für einen regulären Schaltvorgang umfasst.

## Claims

1. Method for operating a hybrid double coupling transmission drive train (10), which has an internal combustion engine (VM), a double coupling arrangement having a first and a second friction coupling (30, 20), a first partial transmission (TG1), a second partial transmission (TG2) and an electric machine (EM) which is or can be connected to the input of the second partial transmission (TG2), wherein, in hybrid boost operation, initially drive power from the electric machine (EM) is transmitted via the second partial transmission (TG2), and the friction coupling (20) assigned to the second partial transmission (TG2) is opened and the gear stage 2 engaged, and drive power from the internal combustion engine (VM) is transmitted via the first partial transmission (TG1), and the friction coupling (30) arranged in the first partial transmission (TG1) is closed and the gear stage 3 engaged, and upon further acceleration the method comprises switching the electric machine (EM) in terms of drive to the first partial transmission (TG1), **characterized in that** both drive machines (EM, VM) are operated in the gear stage 3 via the first partial transmission (TG1) until the electric machine (EM) is shifted to the gear stage 4 shortly before the limit rotational speed (nVM) of the internal combustion engine (VM) is reached (shifting process 1), and the internal combustion engine is shifted from gear stage 3 to gear stage 4 at a short time interval with respect to the shifting of the electric machine (EM) (shifting process 2).

2. Method according to Claim 1, **characterized in that** the shifting (shifting process 2) of the internal combustion engine (VM) from gear stage 3 to gear stage 4 is compensated by the electric machine (EM).

3. Method according to Claim 1 or 2, **characterized in that** the time interval between the two shifting processes (shifting process 1 and 2) is less than 150 ms.

4. Method according to one of Claims 1 to 3, **characterized in that** the shifting of the internal combustion engine in a manner free from interruptions in traction power is effected by fading over the two friction couplings (30, 20), wherein the time required for the fading-over operation involves half the time required for a regular shifting process.

## Revendications

1. Procédé de fonctionnement d'une chaîne cinématique (10) à boîte de vitesses hybridisée à double embrayage, qui présente un moteur à combustion interne (VM), un agencement de double embrayage doté d'un premier et d'un deuxième embrayage à friction (30, 20), une première boîte de vitesses partielle (TG1), une deuxième boîte de vitesses partielle (TG2) ainsi qu'une machine électrique (EM) qui est reliée ou peut être reliée à une entrée de la deuxième boîte de vitesses partielle (TG2), dans lequel, dans un mode boost hybride, d'abord de la puissance d'entraînement provenant de la machine électrique (EM) est transmise par l'intermédiaire de la deuxième boîte de vitesses partielle (TG2), et l'embrayage à friction (20) associé à la deuxième boîte de vitesses partielle (TG2) est ouvert et le rapport de vitesse 2 est enclenché, et de la puissance d'entraînement provenant du moteur à combustion interne (VM) est transmise par l'intermédiaire de la première boîte de vitesses partielle (TG1), et l'embrayage à friction (30) disposé dans la première boîte de vitesses partielle (TG1) est fermé et le rapport de vitesse 3 est enclenché, et en cas d'accélération supplémentaire, le procédé comprend le transfert en entraînement de la machine électrique (EM) dans la première boîte de vitesses partielle (TG1),
**caractérisé en ce que** les deux machines d'entraînement (EM,VM) fonctionnent par l'intermédiaire de la première boîte de vitesses partielle (TG1) dans le rapport de vitesse 3, la machine électrique (EM) est commutée sur le rapport de vitesse 4 (changement de vitesse 1) jusque peu avant que la vitesse de rotation limite (nVM) du moteur à combustion interne (VM) ne soit atteinte, et le moteur à combustion interne est commuté avec un intervalle de temps réduit pour faire passer les machines électriques (EM) du rapport de vitesse 3 au rapport de vitesse 4 (changement de vitesse 2).

2. Procédé selon la revendication 1, **caractérisé en ce que** le fait de faire passer (changement de vitesse 2) le moteur à combustion interne (VM) du rapport de vitesse 3 au rapport de vitesse 4 est compensé par la machine électrique (EM).

3. Procédé selon la revendication 1 ou 2, **caractérisé en ce que** l'intervalle de temps des deux changements de vitesse (changements de vitesse 1 et 2) est inférieur à 150 ms.

4. Procédé selon l'une quelconque des revendications 1 à 3, **caractérisé en ce que** le passage sans interruption de la force de traction du moteur à combustion interne est effectué par l'enchaînement des deux embrayages à friction (30, 20), le temps nécessaire à l'enchaînement comprenant la moitié du temps nécessaire à un changement de vitesse ordinaire.
